# EUROPEAN PATENT SPECIFICATION

(11) **EP 3 852 339 B1**
(45) Date of publication and mention of the grant of the patent: **09.08.2023**
(21) Application number: 21152206.5
(22) Date of filing: 19.01.2021
(51) Int. Cl.: H04W 12/084, H04L 9/40

(54) **ENABLING QUALITY OF SERVICE FOR TRUSTED 3RD PARTY NETWORK FUNCTIONS IN CORE NETWORKS**
ERMÖGLICHUNG VON DIENSTGÜTE FÜR VERTRAUENSWÜRDIGE NETZWERKFUNKTIONEN VON DRITTANBIETERN IN KERNNETZWERKEN
ACTIVATION DE LA QUALITÉ DE SERVICE POUR LES FONCTIONS DE RÉSEAU DE TIERS FIABLES DANS DES RÉSEAUX PRINCIPAUX

(30) Priority: 20.01.2020 IN 202041002406
(43) Date of publication of application: 21.07.2021
(73) Proprietor: Nokia Technologies Oy, 02610 Espoo (FI)
(72) Inventor: PRASAD, Pradyumna Ram, 560078 Bangalore (IN); BYKAMPADI, Nagendra S, 560102 Bangalore (IN)
(74) Representative: Laine IP Oy

(56) References cited:
- ERICSSON: "New Solution for resource level authorization using access tokens", 3GPP DRAFT; S3-193098_WAS_S3-192817_SOLUTION FOR RESOURCE LEVEL AUTHORIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG3, no. Wroclaw (Poland); 20190826 - 20190830 29 August 2019 (2019-08-29), XP051760491, Retrieved from the Internet: URL:http://www.3gpp.org/ftp/Meetings_3GPP_ SYNC/SA3/Docs/S3-193098.zip [retrieved on 2019-08-29]
- ERICSSON: "Authorization using Access Tokens based on NF-Subtype", 3GPP DRAFT; S3-194262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Reno, Nevada, United States; 20191118 - 20191122 11 November 2019 (2019-11-11), XP051824574, Retrieved from the Internet: URL:https://ftp.3gpp.org/tsg_sa/WG3_Securi ty/TSGS3_97_Reno/Docs/S3-194262.zip S3-194262_CR_33501_NFSubtypeAuthorization. doc [retrieved on 2019-11-11]
- NOKIA ET AL: "Resource Level Authorization using Access Tokens", 3GPP DRAFT; S3-194365, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Reno (USA); 20191118 - 20191122 11 November 2019 (2019-11-11), XP051824676, Retrieved from the Internet: URL:https://ftp.3gpp.org/tsg_sa/WG3_Securi ty/TSGS3_97_Reno/Docs/S3-194365.zip S3-194365 Resource level authorization .doc [retrieved on 2019-11-11]

## Description

### FIELD

Various example embodiments relate in general to core networks, such as core networks of cellular communication systems, and more specifically, to enabling Quality of Service, QoS, for trusted 3^{rd} party network functions in such networks.

### BACKGROUND

In general, Quality of Service, QoS plays a crucial role in various communication networks. Different users may have different QoS requirements and a communication network needs to be able to meet such requirements. QoS requirements have to be considered for example in core networks of cellular communication systems, such as in 5G core networks developed by the 3rd Generation Partnership Project, 3GPP. In 5G core networks, Network Functions, NFs, may have some QoS requirements but access control needs to be enforced at the same time, especially for 3^{rd} party NFs. The 3GPP still develops 5G core networks and there is a need to provide improved methods, apparatuses and computer programs for enabling QoS for trusted 3^{rd} party NFs in 5G core networks, and possibly in other core networks in the future as well.

ERICSSON: "New Solution for resource level authorization using access tokens", S3-193098, 3GPP TSG-SA WG3 Meeting #96, Wroclaw (Poland), 26-30 August 2019, proposes to enhance OAuth 2.0 procedures to convey "additional scope" information in the JSON Web Token.

### SUMMARY

According to some aspects, there is provided the subject-matter of the independent claims. Some embodiments are defined in the dependent claims.

The scope of protection sought for various embodiments of the invention is set out by the independent claims. The embodiments and features, if any, described in this specification that do not fall under the scope of the independent claims are to be interpreted as examples useful for understanding various embodiments of the invention.

The invention is set out in the appended set of claims.

According to an aspect of the present invention, there is provided a method for a first network function, wherein the first network function is a network repository function, the method comprising, receiving, by the first network function, an access token request from a second function, wherein the second function is a network function consumer or an application function and responsive to receiving the access token request, transmitting by the first network function to the second function an access token usable in a service request to access a service of a third network function, wherein the third network function is a network exposure function or a network function producer and the access token comprises at least a throughput parameter, wherein the throughput parameter defines a limit on a total number of transactions for which the access token can be used within a lifetime of the access token.

### BRIEF DESCRIPTION OF THE DRAWINGS

FIGURE 1 illustrates an exemplary system in accordance with at least some embodiments;
FIGURE 2 illustrates signalling in accordance with at least some embodiments;
FIGURE 3 illustrates an example apparatus capable of supporting at least some embodiments;
FIGURE 4 illustrates a first signalling example in accordance with at least some embodiments;
FIGURE 5 illustrates a second signalling example in accordance with at least some embodiments;
FIGURE 6 illustrates a third signalling example in accordance with at least some embodiments;
FIGURE 7 illustrates a flow graph of a first method in accordance with at least some embodiments;
FIGURE 8 illustrates a flow graph of a second method in accordance with at least some embodiments; and
FIGURE 9 illustrates a flow graph of a third method in accordance with at least some embodiments.

### EMBODIMENTS

Quality of Service, QoS, may be enabled by the procedures described herein for example for trusted 3^{rd} party Network Functions, NFs, in core networks, such as in 5G core networks. At least in case of 5G core networks, the network may comprise a first NF, a second function and a third NF. The first NF may be a Network Repository Function, NRF. The second function may be a NF Consumer, NFC, or an Application Function, AF. The third NF may be a Network Exposure Function, NEF, or a NF Producer, NFP.

According to some embodiments of the present invention, the first NF may receive an access token request from the second function and transmit, responsive to receiving the access token request, an access token to the second function. The access token may comprise a throughput parameter. The second function may then use the received access token along with the throughput parameter in a service request, to request access to a service provided by the third NF. Upon receiving the service request, the third NF may determine whether a throughput has exceeded a limit. If the throughput has not exceeded the limit, the third NF may grant access to the service for the second function and transmit a response indicating that access to the service is granted. However, if the throughput has exceeded the limit, the third NF may decide not to grant access to the service and transmit a response indicating that access to the service is not granted.

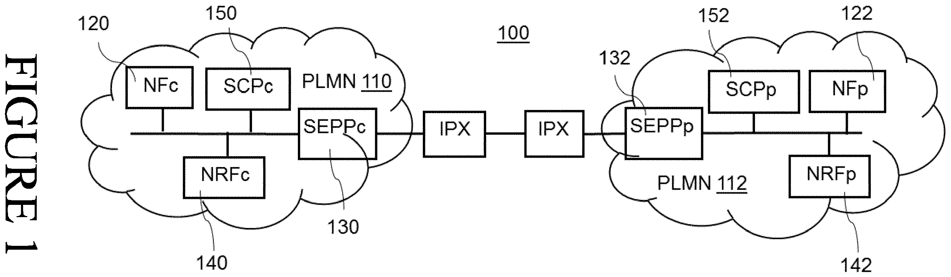

FIGURE 1 illustrates an exemplary system in accordance with at least some embodiments of the present invention. The exemplary system of FIGURE 1 comprises two Public Land Mobile Networks, PLMNs, 110 and 112, each equipped with at least one NF, 120 and 122, respectively. An NF may refer to an operational and/or a physical entity. An NF may be a specific network node or element, or a specific function or set of functions carried out by one or more entities, such as Virtual Network Elements, VNFs. At least some embodiments of the present invention may be applied in containerized deployments as well. One physical node may be configured to perform plural NFs. Examples of such network functions include a (radio) access or resource control or management function, session management or control function, interworking, data management or storage function, authentication function or a combination of one or more of these functions.

In case of a 3^{rd} Generation Partnership Project, 3GPP, Service-Based Architecture, SBA, of 5G core networks, NFs may comprise at least some of an Access and Mobility Function, AMF, a Session Management Function, SMF, a Network Slice Selection Function, NSSF, a NEF, an NRF, a Unified Data Management, UDM, an Authentication Server Function, AUSF, a Policy Control Function, PCF, an AF, Operations Administration and Maintenance, OAM, and Network Data Analysis Function, NWDAF. In some embodiments, the AF may not be a NF though as defined by the 3GPP. Instead, the AF may be a complement to the NF. The AF may be a third party AF, e.g., for an enterprise.

The PLMNs 110 and 112 may further comprise a Security Edge Protection Proxy, SEPP, 130 and 132, respectively. The SEPPs 130 and 132 may be configured to operate as a security edge node or gateway. The NFs may communicate with each other using representational state transfer Application Programming Interfaces, APIs. These may be known as Restful APIs.

The NEF for example may comprise an Application Exposure Function, AEF, and a Common API Framework, CAPIF. The AEF may also be referred to as an API Exposing Function. In any case, the AEF may be a provider of Service APIs and/or a service communication entry point of a Service API to API invokers, such as AFs. The CAPIF may be a functionality that can be a part of the AEF of the NEF, or the NEF in general. The CAPIF may be defined in a 3GPP standard specification TS 29.222 for example.

The CAPIF may provide services such as CAPIF Discover Service API, CAPIF Publish Service API, CAPIF Events API, CAPIF API Invoker Management API, CAPIF Security API, CAPIF Monitoring API, CAPIF Logging API Invocation API, CAPIF Auditing API, CAPIF Access Control Policy API. In some embodiments, security of APIs is considered. An AF may support impact of an application on traffic routing, access to the NEF and policy control, for example similarly as in the Evolved Packet Core, EPC.

The SEPP 130, 132 is a network node at the boundary of an operator's network that receives a message, such as an HTTP request or HTTP response from the NF, applies protection for sending, and forwards the reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF.

An inter-PLMN interconnection allows secure communication between a service-consuming NF and a service-producing NF, referred to as a cNF 120 and a pNF 122 in FIGURE 1. In some embodiments of the present invention, the cNF 120 may be referred to as an NF Consumer, NFC, and the pNF 122 may be referred to as an NF Producer, NFP. A Service Communication Proxy, SCP, 150 may be deployed for indirect communication between network functions. The SCP 150 is an intermediate function/element to assist in routing of messages, such as control plane messages such as Diameter Routing Agent, DRA, messages between NFs.

Direct communication may be applied between the cNF 120 and the pNF 122 for an NF service, or NF service communication may be performed indirectly via SCP(s) 150. In direct communication, the cNF 120 may perform discovery of the target pNF 122 by local configuration or via a local NRF, the cNRF 140. The cNF 120 may delegate the discovery of the target pNF 122 to the pSCP 150 used for indirect communication. In the latter case, the pSCP 152 uses the parameters provided by the cNF 120 to perform discovery and/or selection of the target NFP. The pSCP 152 address may be locally configured in cNF 120. In general, an SCP is an intermediate function covering delegated NF discovery to help resolving the target NF producer instances and delegated routing to help route control plane messages between two NFs.

NF discovery and NF service discovery enable core network entities, such as the cNF 140 or the SCP 150, to discover a set of NF instance(s) and NF service instance(s) for a specific NF service or an NF type. The NRF is a function that is used to support the functionality of NFs and NF service discovery and status notification. The NRF may maintain an NF profile of available NF instances and their supported services. The NRF may notify about newly registered, updated, or deregistered NF instances along with its NF services to a subscribed cNF 120 or cSCP 150. Unless the expected NF and/or NF service information is locally configured on the requesterNF, such as when the expected NF service or NF is in the same PLMN as the requester NF, the NF and NF service discovery may be implemented via the NRF. The NRF may be a logical function. The NRF may also support status notification. An NRF may be co-located together with an SCP.

In order for the cNF 120 or the cSCP 150 to obtain information about the NF and/or NF service(s) registered or configured in a PLMN/slice, the cNF 120 or the cSCP 150 may initiate, based on local configuration, a discovery procedure with the cNRF 140. The discovery procedure may be initiated by providing the type of the NF and optionally a list of the specific service(s) it is attempting to discover. The cNF 120 or the cSCP 150 may also provide other service parameters, such as slicing related information.

In case of an indirect communication, during an NF service discovery in inter-PLMN (roaming) communication, the cSCP 150, on behalf of the cNF 120, may request service discovery from an NRF in its PLMN 110, i.e., the cNRF 140. The cNRF 140 may send a discovery request to an NRF, referred herein as the pNRF 142, in another PLMN 112, e.g. the home PLMN. The pNRF 142 in the other PLMN 112 may respond with a discovery response which may be forwarded to the cSCP via the cNRF 140 in the PLMN 110 of the cNF 120. Then the cSCP may trigger service requests for the pNF via the cSEPP 130 and the pSEPP 132. When using indirect communication, a cNF 120 may provide the SCP an address or name of the NRF which may be used by the SCP.

It is to be noted that at least some of the entities or nodes 120, 122, 130, 132, 140, 142, 150, 152 may act in both service-consuming and service-providing roles and that their structure may also be similar or identical, even though their role in the example of FIGURE 1 in delivery of a particular message is identified by use of the prefix "c" or "p" indicating whether they are acting for the service-consuming or service-producing NF. It is to be noted that instead of "c" and "p", "v" for visited and "h" for home can be used to refer to at least some respective entities in the visited and home PLMNs.

In some embodiments, OAuth based authorization and token exchange may be applied between the mobile networks. Thus, the second network entity, such as the pNRF 142, may be or perform functionalities of an OAuth server. The cNF 120 may be an OAuth client and the pNF 122 may operate as OAuth resource server, and both may be configured to support OAuth authorization framework as defined in RFC 6749.

An NF, such as the pNF 122, may register its services with an NRF. A public key used by the NF in question is needed for verifying an NF service request, i.e., an access token, of the NF. The public key of the NF is the public key of the NRF to which the NF is registered. At least in some current standards, it is implicitly assumed that a public key of an NRF is made available to the NF's services through TLS connections as part of the handshake.

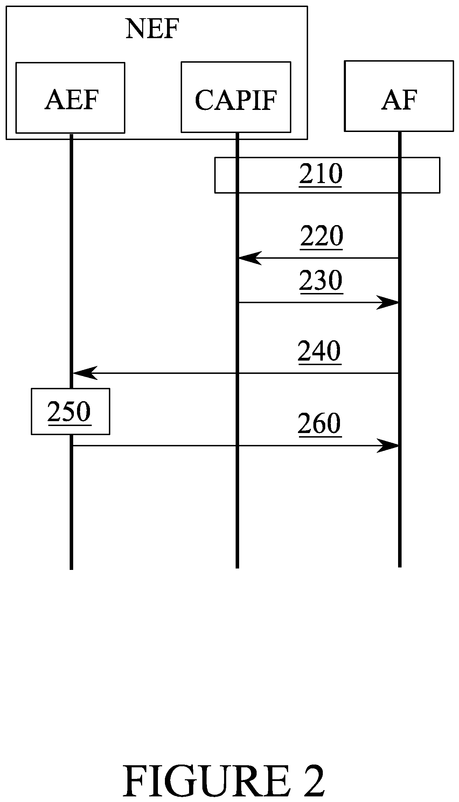

FIGURE 2 illustrates signalling in accordance with at least some embodiments. At Step 210, the AF may register as a trusted application with the CAPIF. After that, the AF may transmit at step 220 an access token request to the NEF, or the CAPIF of the NEF. The access token request may be referred to as a token retrieval request as well. Responsive to receiving the access token request, the NEF, or the CAPIF of the NEF, may transmit at step 230 an access token, for example in an access token response "AccessTokenRsp(AccessTokenClaims(iss, aud, scope, throughput))", to the AF. That is to say, the access token may comprise a throughput parameter. The throughput parameter may for example define a maximum number of transactions during an interval, i.e., a limit for the maximum number of transaction within a certain time period.

At step 240, the AF may transmit a service request, such as a NEF service request, comprising the access token to the NEF, or the AEF of the NEF. At step 250, the NEF, or the AEF of the NEF, may validate/verify the access token. The NEF, or the AEF of the NEF, may verify a digital signature in the access token for example. Upon validating the service request, the NEF, or the AEF of the NEF, may check the throughput parameter against a current throughput between an API Invoker and the AEF/NEF and transmit a response to the service request to the AF at step 260 if the throughput does not exceed a limit. If the validation/verification was successful, the response may indicate that access to the service of the NEF is granted (NEF Service Response, 200 OK), i.e., a service may be provided when it is determined that the throughput does not exceed the limit. That is to say, the response may be that the service is provided. Alternatively, if the validation/verificiation was not successful, the response may indicate that access to the service of the NEF is not granted (NEF Service Response, 429 (Too Many Requests)).

Interaction of an AF with a CAPIF of a NEF to secure communication between the AF and the NEF may be performed as defined in a 3GPP standard specification TS 29.222 for example. Interaction of the AF with an NRF for discovery of the NEF may be performed as defined in a 3GPP standard specification TS 23.502, section 5.7.2.1.

In some embodiments of the present invention, the "Access Control Policy API" of the CAPIF may define access control policy and API invoker policy to restrict a throughput of the AF. In networks where the NRF is present, the CAPIF may offload the work of a OAuth server to the NRF and the NRF may provide OAuth services. Such OAuth services may be defined for example in a 3GPP standard specification TS 29.510. Hence there may not be a need for the CAPIF to duplicate this functionality.

In some embodiments, in case of any NF to NF communication, a NRF may provide an OAuth service for the NF to NF communication. Some embodiments of the present invention thus provide an access control policy for the NRF, thereby enabling enforcement of an access control for any NF to NF communication.

In some embodiments, the CAPIF may be optional network functionality and thus, the AF may use Transport Layer Security, TLS, or Public Key Infrastructure, PKI, to access core network functions securely in the absence of the CAPIF. For such cases, some embodiments of the present invention provide a way to enforce access control for the AF. For instance, services may be accessed until a TLS certificate or a public key distributed by PKI is valid. In some embodiments of the present invention, the AF may use a discovery service of the NRF to locate the NRF and an authorization interaction may be provided for the AF with the NRF, to enable retrieval of relevant access tokens to access services of the NEF.

In some embodiments, the interaction between the AF and the NEF, or the CAPIF of the NEF, is considered. In some embodiments, the interaction between the NEF, or the CAPIF of the NEF, and the NRF may be provided for retrieval of an access token. For instance, required parameters of OAuth in an access token request (AccessTokenClaim) between the NEF, or the CAPIF of the NEF, and the AF may be provided.

Embodiments of the present invention therefore generally enable QoS for trusted 3^{rd} party NFs, for example in a core network of a cellular communication system, such as in a 5G core network. The access token may be extended to enforce a limit on a total number of transactions for which the access token may be used within a lifetime of the access token. In some embodiments, hierarchy may be added between the NEF, or the CAPIF of the NEF, and the NRF for retrieval of the access token. In some embodiments, the NEF, or the CAPIF of the NEF, may be added as clients for retrieval of the access token service at the NRF. The NEF, or the CAPIF of the NEF, may be added as clients for retrieval of the access token service for example to 3GPP standard specification TS 23.502, section 5.7.2.1.

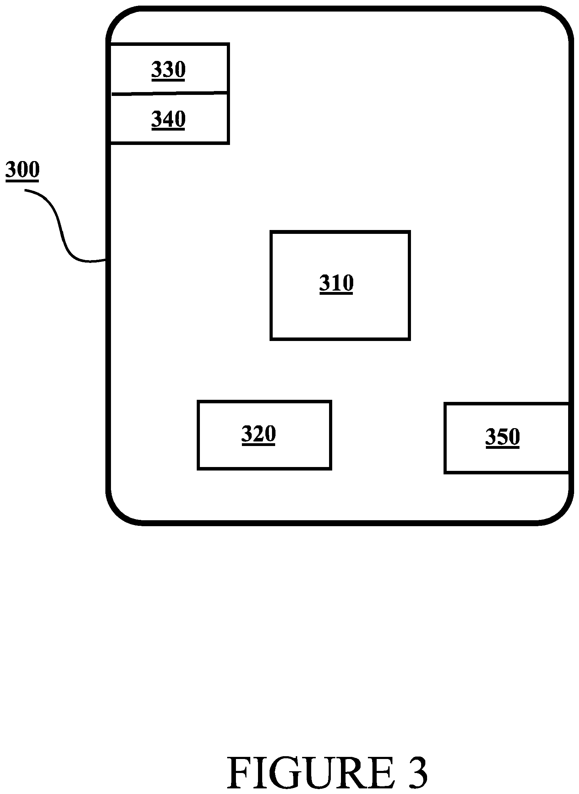

FIGURE 3 illustrates an example apparatus capable of supporting at least some embodiments. Illustrated is device 300, which may comprise, for example, an NRF, NFC, AF, NEF or NFP, or a device controlling functioning thereof. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. Processor 310 may comprise at least one Application-Specific Integrated Circuit, ASIC. Processor 310 may comprise at least one Field-Programmable Gate Array, FPGA. Processor 310 may comprise an Intel Xeon processor for example. Processor 310 may be means for performing method steps in device 300, such as determining, causing transmitting and causing receiving. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular standard, such as a standard defined by the 3GPP. Transmitter 330 may comprise more than one transmitter. Receiver 340 may comprise more than one receiver. Transmitter 330 and/or receiver 340 may be configured to operate in accordance with a suitable communication standard.

Device 300 may comprise User Interface, UI, 350. UI 350 may comprise at least one of a display, a keyboard, a touchscreen, a vibrator arranged to signal to a user by causing device 300 to vibrate, a speaker and a microphone. A user may be able to operate device 300 via UI 350, for example to configure device 300 and/or functions it runs.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. In some embodiments, device 300 lacks at least one device described above. For example, device 300 may not have UI 350.

Processor 310, memory 320, transmitter 330, receiver 340 and/or UI 350 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

In some embodiments of the present invention, a first NF may refer to an NRF, a second function may refer to an NFC or an AF, and a third NF may refer to an NEF or an NFP.

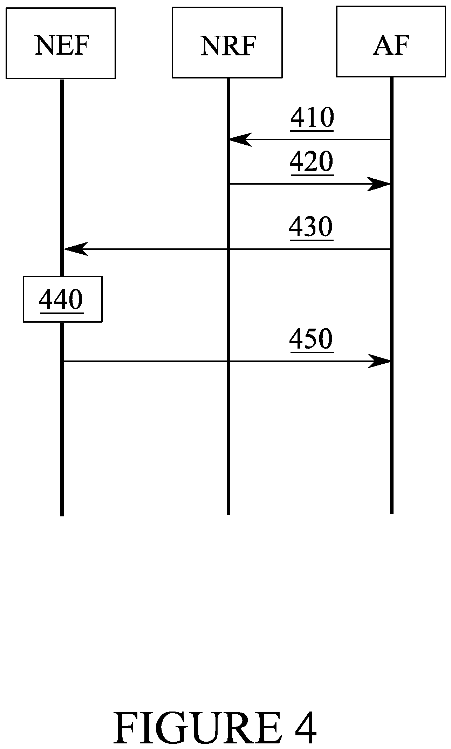

FIGURE 4 illustrates a first signalling example in accordance with at least some embodiments. The first signalling example illustrates an example of interaction between the AF and the NEF through NRF.

At step 410, the first NF, such as the NRF, may receive an access token request (AccessTokenReq) from the second function, such as the AF. For instance, the AF may contact an authorization end point of the NRF. Upon receiving the access token request, the first NF may determine a throughput parameter for the second function. The throughput parameter may be configured locally based on an instance ID of the second function or based on a type of the second function and/or a service of the second function for example.

An access token may be generated by the first NF upon receiving the access token request. For instance, the access token may be generated by the first NF using a private key of the first NF. At step 420, the first NF may transmit, responsive to receiving the access token request, the access token to the second function.

The access token may be transmitted in an access token response (200 OK, AccessTokenRsp(AccessTokenClaims(iss, aud, scope,...throughput)). That is to say, the access token, i.e., the access token response, may comprise the throughput parameter. The access token and the throughput parameter may be used by the second function in a service request, such as a NF service request, to access a service of a third NF, such as the NEF. Thus, the access token may be usable in a service request to access a service of the third NF.

Upon receiving the access token, the second function may, at step 430, transmit the service request to the third NF. The service request may comprise the access token and the access token may further comprise the throughput parameter. Upon receiving the service request the third NF, e.g., the AEF of the NEF, may verify, i.e., validate, the access token at step 440 by using a public key of the first NF. For instance, the third NF may validate the access token for integrity, expiry and scope (service to be accessed).

At step 440, the third NF may also look at the throughput parameter received from the second function, e.g.., the throughput parameter of the particular AF and check if the throughput has exceeded a limit. In general, the throughput parameter may be the limit, such as a maximum number of transaction during a time interval. The third NF may accept or reject the service request to the second function depending on whether the throughput has been exceeded, or not. The throughput may be checked against token parameters and a response to the service request (NEF Service Response, 200 OK, 429 (Too many requests) may be transmitted accordingly at step 450.

The throughput may be a current throughput of the second function and the current throughput may be checked against the throughput parameter. For instance, the third NF may check whether the current throughput has exceeded the limit by calculating a current throughput, e.g., based on local logic, for each of the peer AFs, i.e., second functions in general. The current throughput may be dynamically calculated using Key Performance Indicators, KPIs, which may be referred to counters as well.

That is to say, at step 440 the third NF may determine whether the throughput has exceeded the limit and transmit the response to the service request based on said determination. For instance, the third NF may determine that the throughput has not exceeded the limit and transmit a response to the service request, the response indicating that access to the service of the third NF is granted, e.g., the service may be provided as the response upon determining that the throughput has not exceeded the limit, such as number of transactions during a time interval. The third NF may verify, based on determining that the throughput has not exceeded the limit, a digital signature in the access token using a public key of the first NF.

Alternatively, the third NF may determine that the throughput has exceeded the limit and transmit a response to the service request, the response indicating that access to the service of the third NF is not granted. The third NF may decide, based on determining that the throughput has not exceeded the limit, not to verify the digital signature in the access token. The third NF may determine whether the throughput has exceeded the limit by comparing the current throughput of the second NF to the limit, i.e., to the throughput parameter.

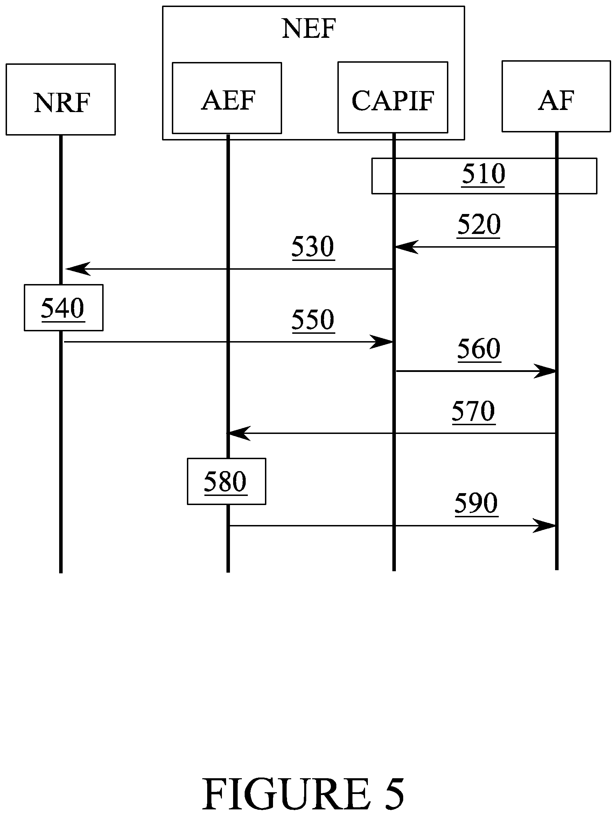

FIGURE 5 illustrates a second signalling example in accordance with at least some embodiments. The first signalling example illustrates and example, wherein the CAPIF uses an authorization service of the NRF for retrieving an access token for the AF. At step 510, the AF may register as a trusted application with the NEF, or the CAPIF of the NEF, similarly as at step 210 of FIGURE 2.

At step 520, the third NF, such as the NRF or the CAPIF of the NEF, may receive an access token request (AccessTokenReq) from the second function, such as the AF, similarly as at step 410 of FIGURE 4. For instance, the AF may contact a token end point of the CAPIF of the NRF. At step 530, the third NF may forward the access token request to the first NF, such as the NRF. The access token request may be forwarded to an authorization end point of the NRF for example.

At step 540, the first NF may, responsive to receiving the access token request, generate an access token along with a throughput parameter similarly as in the example of FIGURE 4. At step 550, the first NF may transmit the access token to the third NF similarly as at step 420 of FIGURE 4. The access token may be transmitted in an access token response (200 OK, AccessTokenRsp(AccessTokenClaims(iss, aud, scope,...throughput)). That is to say, the access token, i.e., the access token response, may comprise a throughput parameter. The access token and the throughput parameter may be usable by the second function in a service request, such as a NF service request, to access a service of the third NF, such as the NEF or the AEF of the NEF. At step 560, the third NF may forward the received access token comprising the throughput parameter to the second function.

Upon receiving the access token, the second function may, at step 570, transmit the service request to the third NF, e.g., the AEF of the NEF, similarly as at step 430 of FIGURE 4. The service request may comprise the access token and the access token may further comprise the throughput parameter. The third NF, e.g., the AEF of the NEF, may verify, i.e., validate, the access token at step 580 by using a public key of the first NF similarly as at step 440 of FIGURE 4. For instance, the third NF may validate the access token for integrity, expiry and scope (service to be accessed).

Similarly as at step 440 of FIGURE 4, at step 580 the third NF may look at the throughput parameter received from the second function, e.g., the throughput parameter of the particular AF, and check if a throughput has exceeded a limit. The third NF may accept or reject the service request of the second function depending on whether the throughput has been exceeded, or not. The throughput may be checked against token parameters and a response to the service request (NEF Service Response, 200 OK, 429 (Too many requests) may be transmitted accordingly at step 590, similarly as at step 450 of FIGURE 4.

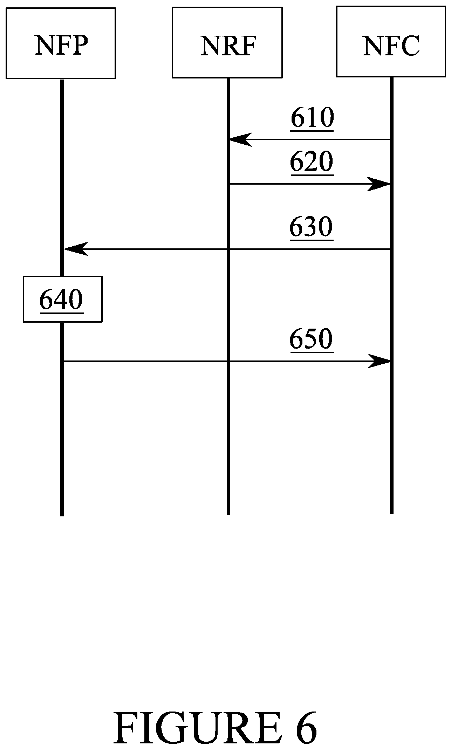

FIGURE 6 illustrates a third signalling example in accordance with at least some embodiments. The third signalling example illustrates an example, wherein an NFP may authorize a QoS of an NFC using an access token provided by an NRF.

At step 610, the first NF, such as the NRF, may receive an access token request (AccessTokenReq) from the second function, such as the NFC, similarly as at step 410 of FIGURE 4. For instance, the NFC may contact an authorization end point of the NRF. Upon receiving the access token request, the first NF may generate an access token along with a throughput parameter similarly as in the example of FIGURE 4. At step 620, the first NF may transmit, responsive to receiving the access token request, the access token to the second function similarly as at step 620 of FIGURE 6. The access token may be transmitted in an access token response (200 OK, AccessTokenRsp(AccessTokenClaims(iss, aud, scope,...throughput)). That is to say, the access token, i.e., the access token response, may comprise a throughput parameter. The access token and the throughput parameter may be usable by the second function in a service request, such as a NF service request, to access a service of a third NF, such as the NFP in FIGURE 6.

Upon receiving the access token, the second function may, at step 630, transmit the service request to the third NF similarly as at step 430 of FIGURE 4. The service request may comprise the access token and the access token may further comprise the throughput parameter. The third NF, e.g., the AEF of the NEF, may verify, i.e., validate, the access token at step 640 by using a public key of the first NF similarly as at step 440 of FIGURE 4. For instance, the third NF may validate the access token for integrity, expiry and scope (service to be accessed).

At step 640, the third NF may also look at the throughput parameter received from the second function, e.g.., the throughput parameter of the particular AF and check if the throughput has exceeded a limit similarly as at step 440 of FIGURE 4. The third NF may accept or reject the service request to the second function depending on whether the throughput has been exceeded, or not. The throughput may be checked against token parameters and a response to the service request (NEF Service Response, 200 OK, 429 (Too many requests) may be transmitted accordingly at step 650, similarly as at step 450.

In general, in embodiments of the present invention, the throughput parameter may comprise an interval and a number of transactions. The interval may be a time interval and the number of transactions may be a maximum number of transaction during the time interval. That is to say, the throughput parameter may define a limit on a total number of transactions for which the access token can be used within a lifetime of the access token.In some embodiments, the interval may be zero and the number of transactions may be for a lifetime of the access token.

The access token and the throughput parameter therein may be generated by the first NF specifically for the second function. So the access token and the throughput parameter therein may be associated with the second function. For instance, the access token and the throughput parameter therein may refer to the access token and the throughput parameter of the second function, to be used to access a service of the third NF.

Embodiments of the present invention thus enable QoS for trusted 3^{rd} party NFs in communication networks, such as in core networks of cellular communication networks. For instance, embodiments of the present invention QoS for trusted 3^{rd} party NFs in 5G core networks, and possibly in other core networks in the future as well.

The first and the third NFs may operate according to at least one standard defined by a 3rd Generation Partnership Project, 3GPP. For instance, the first and the third NFs may be in a core network of a cellular communication network, such as a 5G core network.

At least some embodiments of the present invention may be applied in a 3GPP standard specification TS 29.510, in section 5.2.7.1, table 5.2.7.1-1 (NFR Service and Service Operations as follows:

| **Service Name** | **Service Operations** | **Operation Semantics** | **Example Consumer(s)** |
|---|---|---|---|
| Nnrf_NFManag ement | NFRegister | Request/Response | AMF, SMF, UDM, AUSF, NEF, PCF, SMSF, NSSF, UPF, BSF, CHF, NWDAF, P-CSCF, HSS, UDR, **CAPIf** |
| | NFUpdate | Request/Response | AMF, SMF, UDM, AUSF, NEF, PCF, SMSF, NSSF, UPF, BSF, CHF, NWDAF, P-CSCF, HSS, UDR, **CAPIf** |
| | NFDeregister | Request/Response | AMF, SMF, UDM, AUSF, NEF, PCF, SMSF, NSSF, UPF, BSF, CHF, NWDAF, P-CSCF, HSS, UDR, **CAPIf** |
| | NFStatusSub scribe | Subscribe/Notify | AMF, SMF, PCF, NEF, NSSF, SMSF, AUSF, CHF, NRF, NWDAF, I-CSCF, S-CSCF, IMS-AS, SCP, UDM, **CAPIf** |
| | NFStatusNoti fy | | AMF, SMF, PCF, NEF, NSSF, SMSF, AUSF, CHF, NWDAF, I-CSCF, S-CSCF, IMS-AS, SCP, UDM, **CAPIf** |
| | NFStatusUn Subscribe | | AMF, SMF, PCF, NEF, NSSF, SMSF, AUSF, CHF, NRF, NWDAF, I-CSCF, S-CSCF, IMS-AS, SCP, UDM, **CAPIf** |
| Nnrf_NFDiscov ery | Request | Request/Response | AMF, SMF, PCF, NEF, NSSF, SMSF, AUSF, CHF, NRF, NWDAF, I-CSCF, S-CSCF, IMS-AS, SCP, UDM, AF (NOTE 2) |
| Nnrf_AccessTo ken | Get | Request/Response | AMF, SMF, PCF, NEF, NSSF, SMSF, AUSF, UDM, NWDAF, I-CSCF, S-CSCF, IMS-AS, HSS, **AF, CAPIf** |

At least some embodiments of the present invention may be applied in a 3GPP standard specification TS 29.510 as API additions, e.g., as additions to an existing yaml "TS29510_Nnrf_AccessToken.yaml", as follows (if interval is 0, the number of transaction is for a lifetime of an access token):

```
     AccessTokenClaims:
        type: object
        required:
          - iss
          - sub
          - aud
          - scope
          - exp
        properties:
          iss:
          throughput:
             type: object
             required:
              - interval
              - numberOfTransactions
             properties:
               interval
                  type: Int64
               numberOfTransactions
                  type: Int64
```

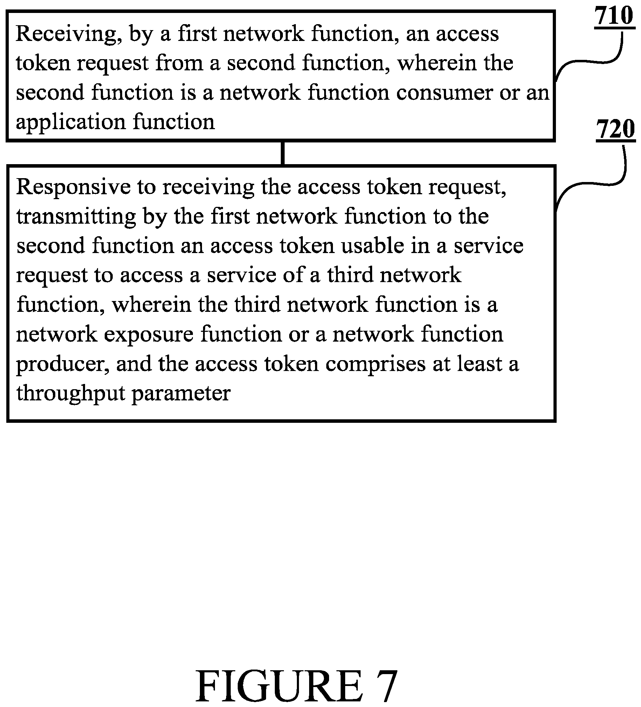

FIGURE 7 is a flow graph of a first method in accordance with at least some embodiments. The phases of the illustrated first method may be performed by a first NF, such as the NRF, or by a control device configured to control the functioning thereof, possibly when installed therein.

The first method may comprise, at step 710, receiving, by the first network function, an access token request from a second function, wherein the second function is a network function consumer or an application function. The first method may also comprise, at step 720, responsive to receiving the access token request, transmitting by the first network function to the second function an access token usable in a service request to access a service of a third network function, wherein the third network function is a network exposure function or a network function producer, and the access token comprises at least a throughput parameter.

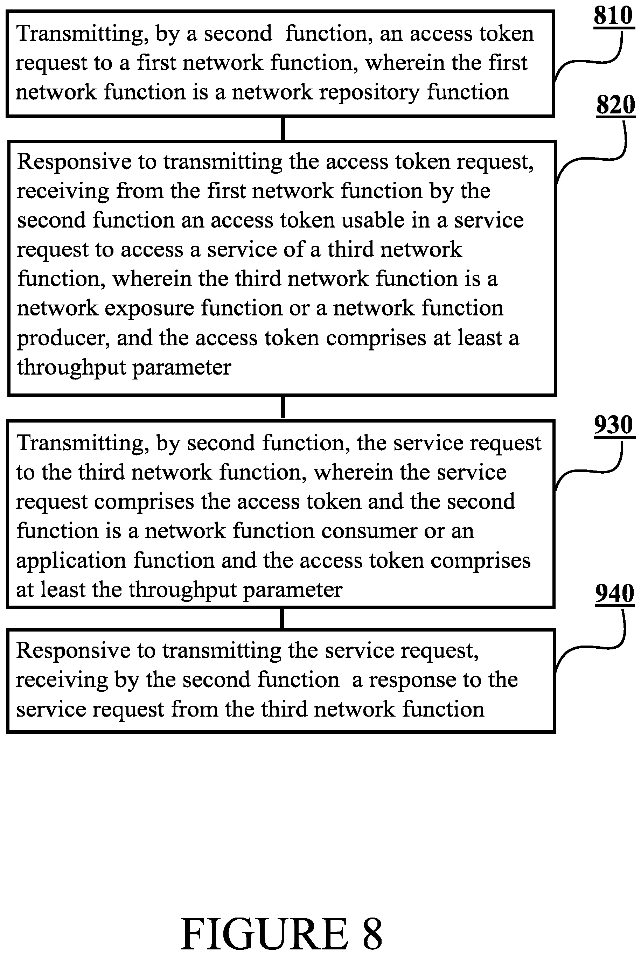

FIGURE 8 is a flow graph of a second method in accordance with at least some embodiments. The phases of the illustrated second method may be performed by a second function, such as a NFC or an AF, or by a control device configured to control the functioning thereof, possibly when installed therein.

The second method may comprise, at step 810, transmitting, by the second function, an access token request to a first network function, wherein the first network function is a network repository function. The second method may also comprise, at step 820, responsive to transmitting the access token request, receiving from the first network function by the second function an access token usable in a service request to access a service of a third network function, wherein the third network function is a network exposure function or a network function producer and the access token comprises at least a throughput parameter. Moreover, the second method may comprise, at step 830, transmitting, by the second function, the service request to the third network function, wherein the service request comprises the access token and the access token comprises at least the throughput parameter. Finally, the second method may comprise, at step 840, responsive to transmitting the service request, receiving by the second function a response to the service request from the third network function.

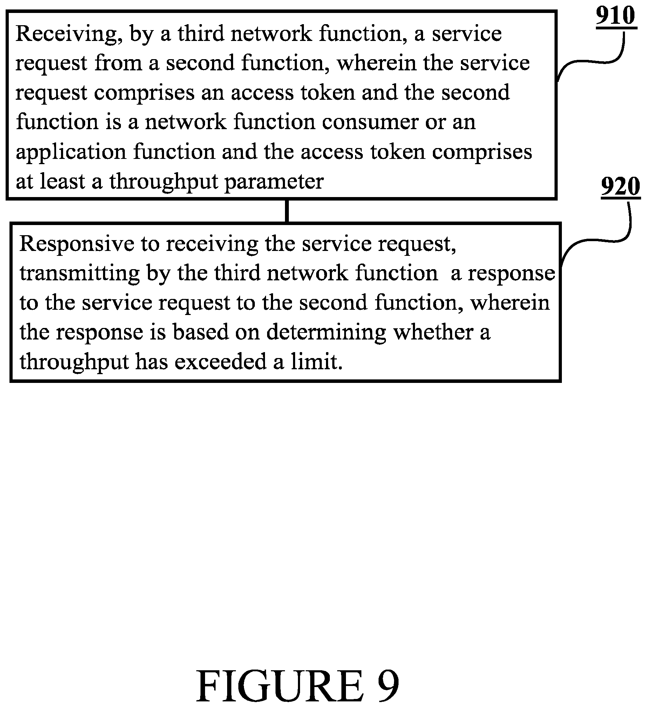

FIGURE 9 is a flow graph of a third method in accordance with at least some embodiments. The phases of the illustrated third method may be performed by a third NF, such as an NEF or an NFP, or by a control device configured to control the functioning thereof, possibly when installed therein.

The third method may comprise, at step 910, receiving, by the third network function, a service request from a second function, wherein the service request comprises an access token and the second function is a network function consumer or an application function and the access token comprises at least a throughput parameter. The third method may also comprise, at step 920, responsive to receiving the service request, transmitting by the third network function a response to the service request to the second function, wherein the response is based on determining whether a throughput has exceeded a limit.

It is to be understood that the embodiments disclosed are not limited to the particular structures, process steps, or materials disclosed herein. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an exemplary embodiment, an apparatus, such as, for example, an NRF, NFC, AF, NEF or NFP, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, an NRF, NFC, AF, NEF or NFP, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments find industrial application at least in 5G core networks, wherein it is desirable to enable QoS for trusted 3^{rd} party NFs, and possibly in other core networks in the future as well.

### ACRONYMS LIST

- 3GPP: 3rd Generation Partnership Project
- AEF: Application Exposure Function
- AF: Application Function
- AMF: Access and Mobility Function
- API: Application Programming Interfaces
- AUSF: Authentication Server Function
- CAPIF: Common API Framework
- DRA: Diameter Routing Agent
- EPC: Evolved Packet Core
- IPX: IP eXchanges
- KPI: Key Performance Indicator
- NEF: Network Exposure Function
- NF: Network Function
- NFC: NF Consumer
- NFP: NF Producer
- NRF: Network Repository Function
- NSSF: Network Slice Selection Function
- NWDAF: Network Data Analysis Function
- OAM: Operations Administration and Maintenance
- PCF: Policy Control Function
- PKI: Public Key Infrastructure
- PLMN: Public Land Mobile Network
- QoS: Quality of Service
- SBA: Service-Based Architecture
- SCP: Service Communication Proxy
- SEPP: Security Edge Protection Proxy
- SMF: Session Management Function
- TLS: Transport Layer Security
- UDM: Unified Data Management
- VNF: Virtual Network Function

### REFERENCE SIGNS LIST

| | |
|---|---|
| 110, 112 | PLMNs |
| 120, 122 | NFs |
| 130, 132 | SEPPs |
| 140, 142 | NRFs |
| 150, 152 | SCPs |
| 210 - 260 | Steps of the process of FIGURE 2 |
| 300 - 350 | Structure of the apparatus of FIGURE 3 |
| 410 - 450 | Steps of the process of FIGURE 4 |
| 510 - 590 | Steps of the process of FIGURE 5 |
| 610 - 650 | Steps of the process of FIGURE 6 |
| 710 - 720 | Phases of the first method in FIGURE 7 |
| 810 - 840 | Phases of the second method in FIGURE 8 |
| 910 - 920 | Phases of the third method in FIGURE 9 |

## Claims

1. A method for a first network function, wherein the first network function is a network repository function (140), the method comprising:
- receiving (710), by the first network function (140), an access token request from a second function, wherein the second function is a network function consumer (120) or an application function; and
- responsive to receiving the access token request, transmitting (720) by the first network function (140) to the second function an access token usable in a service request to access a service of a third network function, wherein the third network function is a network exposure function or a network function producer (122) and the access token comprises at least a throughput parameter, wherein the throughput parameter defines a limit on a total number of transactions for which the access token can be used within a lifetime of the access token.

2. A method according to claim 1, wherein the access token request is received from the second function directly or via a common application programming interface framework of the third network function.

3. A method according to claim 1 or claim 2, wherein the access token is transmitted to the second function directly, or via a common application programming interface framework when the second function is the application function.

4. A method according to any of the preceding claims, wherein the access token is generated by the first network function (140) upon receiving the access token request.

5. A method according to claim 4, wherein the generated access token is signed by the first network function (140) using a private key of the first network function (140).

6. A method according to any of the preceding claims, wherein the throughput parameter is the limit.

7. A method according to claim 6, wherein the throughput parameter comprises an interval and a number of transactions.

8. A method according to claim 7, wherein the interval is zero and the number of transactions is for a lifetime of the access token.

9. A method according to any of the preceding claims, wherein the first network function (140), the second function and the third network function operate according to at least one standard specification defined by a 3^{rd} Generation Partnership Project, 3GPP.

10. A method according to any of the preceding claims, wherein the first (140) and the third network functions are in a core network of a cellular communication network.

11. A method according to claim 10, wherein the core network is a 5G core network.

12. An apparatus comprising:
- means for receiving an access token request from a second function, wherein the second function is a network function consumer (120) or an application function; and
- means for transmitting, responsive to receiving the access token request, to the second function an access token usable in a service request to access a service of a third network function, wherein the third network function is a network exposure function or a network function producer (122) and the access token comprises at least a throughput parameter, wherein the throughput parameter defines a limit on a total number of transactions for which the access token can be used within a lifetime of the access token.

13. An apparatus according to claim 12, further comprising means for performing a method according to any of claims 2 - 11.

14. A computer program comprising instructions which, when executed by a computer, cause the computer to perform at least the following:
- receiving, by the first network function (140), an access token request from a second function, wherein the second function is a network function consumer (122) or an application function; and
- responsive to receiving the access token request, transmitting by the first network function (140) to the second function an access token usable in a service request to access a service of a third network function, wherein the third network function is a network exposure function or a network function producer (122) and the access token comprises at least a throughput parameter, wherein the throughput parameter defines a limit on a total number of transactions for which the access token can be used within a lifetime of the access token.

15. A computer program according to claim 14, further comprising instructions which, when executed by the computer, cause the computer to perform a method according to any of claims 2 - 11

## Patentansprüche

1. Verfahren für eine erste Netzwerkfunktion, wobei die erste Netzwerkfunktion eine Netzwerkrepositoriumfunktion (140) ist, wobei das Verfahren Folgendes umfasst:
- Empfangen (710) einer Zugangstokenanforderung durch die erste Netzwerkfunktion (140) von einer zweiten Funktion, wobei die zweite Funktion ein Netzwerkfunktionsverbraucher (120) oder eine Anwendungsfunktion ist; und
- in Reaktion auf das Empfangen der Zugangstokenanforderung Übertragen (720) eines Zugangstokens, das in einer Dienstanforderung für einen Zugang zu einem Dienst einer dritten Netzwerkfunktion verwendbar ist, durch die erste Netzwerkfunktion (140) zur zweiten Funktion, wobei die dritte Netzwerkfunktion eine Netzwerkgefährdungsfunktion oder ein Netzwerkfunktionsproduzent (122) ist und das Zugangstoken mindestens einen Durchsatzparameter umfasst, wobei der Durchsatzparameter eine Grenze für eine Gesamtzahl von Transaktionen definiert, für die das Zugangstoken innerhalb einer Lebensdauer des Zugangstokens verwendet werden kann.

2. Verfahren nach Anspruch 1, wobei die Zugangstokenanforderung direkt oder via ein gemeinsames Anwendungsprogrammierungsschnittstellenframework der dritten Netzwerkfunktion von der zweiten Funktion empfangen wird.

3. Verfahren nach Anspruch 1 oder Anspruch 2, wobei das Zugangstoken direkt oder via ein gemeinsames Anwendungsprogrammierungsschnittstellenframework zur zweiten Funktion übertragen wird, wenn die zweite Funktion die Anwendungsfunktion ist.

4. Verfahren nach einem der vorhergehenden Ansprüche, wobei das Zugangstoken von der ersten Netzwerkfunktion (140) nach Empfangen der Zugangstokenanforderung erzeugt wird.

5. Verfahren nach Anspruch 4, wobei das erzeugte Zugangstoken unter Verwendung eines privaten Schlüssels der ersten Netzwerkfunktion (140) von der ersten Netzwerkfunktion (140) signiert wird.

6. Verfahren nach einem der vorhergehenden Ansprüche, wobei der Durchsatzparameter die Grenze ist.

7. Verfahren nach Anspruch 6, wobei der Durchsatzparameter ein Intervall und eine Anzahl von Transaktionen umfasst.

8. Verfahren nach Anspruch 7, wobei das Intervall null ist und die Anzahl von Transaktionen für eine Lebensdauer des Zugangstokens ist.

9. Verfahren nach einem der vorhergehenden Ansprüche, wobei die erste Netzwerkfunktion (140), die zweite Funktion und die dritte Netzwerkfunktion gemäß mindestens einer Standardspezifikation betrieben werden, die durch ein 3rd Generation Partnership Project, 3GPP, definiert ist.

10. Verfahren nach einem der vorhergehenden Ansprüche, wobei sich die erste (140) und die dritte Netzwerkfunktion in einem Kernnetzwerk eines Mobilfunkkommunikationsnetzwerks befinden.

11. Verfahren nach Anspruch 10, wobei das Kernnetzwerk ein 5G-Kernnetzwerk ist.

12. Einrichtung, die Folgendes umfasst:
- Mittel zum Empfangen einer Zugangstokenanforderung von einer zweiten Funktion, wobei die zweite Funktion ein Netzwerkfunktionsverbraucher (120) oder eine Anwendungsfunktion ist; und
- Mittel zum Übertragen eines Zugangstokens, das in einer Dienstanforderung für einen Zugang zu einem Dienst einer dritten Netzwerkfunktion verwendbar ist, zur zweiten Funktion in Reaktion auf das Empfangen der Zugangstokenanforderung, wobei die dritte Netzwerkfunktion eine Netzwerkgefährdungsfunktion oder ein Netzwerkfunktionsproduzent (122) ist und das Zugangstoken mindestens einen Durchsatzparameter umfasst, wobei der Durchsatzparameter eine Grenze für eine Gesamtzahl von Transaktionen definiert, für die das Zugangstoken innerhalb einer Lebensdauer des Zugangstokens verwendet werden kann.

13. Einrichtung nach Anspruch 12, die ferner Mittel zum Durchführen eines Verfahrens nach einem der Ansprüche 2-11 umfasst.

14. Computerprogramm, das Anweisungen umfasst, die, wenn sie von einem Computer ausgeführt werden, den Computer veranlassen, mindestens Folgendes durchzuführen:
- Empfangen einer Zugangstokenanforderung durch die erste Netzwerkfunktion (140) von einer zweiten Funktion, wobei die zweite Funktion ein Netzwerkfunktionsverbraucher (122) oder eine Anwendungsfunktion ist; und
- in Reaktion auf das Empfangen der Zugangstokenanforderung Übertragen eines Zugangstokens, das in einer Dienstanforderung für einen Zugang zu einem Dienst einer dritten Netzwerkfunktion verwendbar ist, durch die erste Netzwerkfunktion (140) zur zweiten Funktion, wobei die dritte Netzwerkfunktion eine Netzwerkgefährdungsfunktion oder ein Netzwerkfunktionsproduzent (122) ist und das Zugangstoken mindestens einen Durchsatzparameter umfasst, wobei der Durchsatzparameter eine Grenze für eine Gesamtzahl von Transaktionen definiert, für die das Zugangstoken innerhalb einer Lebensdauer des Zugangstokens verwendet werden kann.

15. Computerprogramm nach Anspruch 14, das ferner Anweisungen umfasst, die, wenn es vom Computer ausgeführt wird, den Computer veranlassen, ein Verfahren nach einem der Ansprüche 2-11 durchzuführen.

## Revendications

1. Procédé pour une première fonction de réseau, dans lequel la première fonction de réseau est une fonction de référentiel de réseau (140), le procédé comprenant :
- la réception (710), par la première fonction de réseau (140), d'une demande de jeton d'accès provenant d'une deuxième fonction, dans lequel la deuxième fonction est un consommateur de fonction de réseau (120) ou une fonction d'application ; et
- en réponse à la réception de la demande de jeton d'accès, la transmission (720) à la deuxième fonction, par la première fonction de réseau (140), d'un jeton d'accès utilisable dans une demande de service pour accéder à un service d'une troisième fonction de réseau, dans lequel la troisième fonction de réseau est une fonction d'exposition au réseau ou un producteur de fonction de réseau (122) et le jeton d'accès comprend au moins un paramètre de débit, dans lequel le paramètre de débit définit une limite sur le nombre total de transactions pour lesquelles le jeton d'accès peut être utilisé pendant une durée de vie du jeton d'accès.

2. Procédé selon la revendication 1, dans lequel la demande de jeton d'accès est reçue de la deuxième fonction directement ou via un cadre d'interface de programmation d'application commune de la troisième fonction de réseau.

3. Procédé selon la revendication 1 ou la revendication 2, dans lequel le jeton d'accès est transmis à la deuxième fonction directement, ou via un cadre d'interface de programmation d'application commune lorsque la deuxième fonction est la fonction d'application.

4. Procédé selon l'une des revendications précédentes, dans lequel le jeton d'accès est généré par la première fonction de réseau (140) à la réception de la demande de jeton d'accès.

5. Procédé selon la revendication 4, dans lequel le jeton d'accès généré est signé par la première fonction de réseau (140) à l'aide d'une clé privée de la première fonction de réseau (140).

6. Procédé selon l'une des revendications précédentes, dans lequel le paramètre de débit est la limite.

7. Procédé selon la revendication 6, dans lequel le paramètre de débit comprend un intervalle et un nombre de transactions.

8. Procédé selon la revendication 7, dans lequel l'intervalle est égal à zéro et le nombre de transactions correspond à la durée de vie du jeton d'accès.

9. Procédé selon l'une des revendications précédentes, dans lequel la première fonction de réseau (140), la deuxième fonction et la troisième fonction de réseau fonctionnent selon au moins une spécification standard définie par un projet de partenariat de troisième génération (3GPP).

10. Procédé selon l'une des revendications précédentes, dans lequel les première (140) et troisième fonctions de réseau sont dans un réseau central d'un réseau de communication cellulaire.

11. Procédé selon la revendication 10, dans lequel le réseau central est un réseau central 5G.

12. Appareil comprenant :
- des moyens pour recevoir une demande de jeton d'accès provenant d'une deuxième fonction, dans lequel la deuxième fonction est un consommateur de fonction de réseau (120) ou une fonction d'application ; et
- des moyens pour transmettre à la deuxième fonction, en réponse à la réception de la demande de jeton d'accès, un jeton d'accès utilisable dans une demande de service pour accéder à un service d'une troisième fonction de réseau, dans lequel la troisième fonction de réseau est une fonction d'exposition au réseau ou un producteur de fonction de réseau (122) et le jeton d'accès comprend au moins un paramètre de débit, dans lequel le paramètre de débit définit une limite sur le nombre total de transactions pour lesquelles le jeton d'accès peut être utilisé pendant une durée de vie du jeton d'accès.

13. Appareil selon la revendication 12, comprenant en outre des moyens pour réaliser un procédé selon l'une des revendications 2 à 11.

14. Programme informatique comprenant des instructions qui, lorsqu'elles sont exécutées par un ordinateur, amènent l'ordinateur à réaliser au moins ce qui suit :
- la réception, par la première fonction de réseau (140), d'une demande de jeton d'accès provenant d'une deuxième fonction, dans lequel la deuxième fonction est un consommateur de fonction de réseau (122) ou une fonction d'application ; et
- en réponse à la réception de la demande de jeton d'accès, la transmission à la deuxième fonction, par la première fonction de réseau (140), d'un jeton d'accès utilisable dans une demande de service pour accéder à un service d'une troisième fonction de réseau, dans lequel la troisième fonction de réseau est une fonction d'exposition au réseau ou un producteur de fonction de réseau (122) et le jeton d'accès comprend au moins un paramètre de débit, dans lequel le paramètre de débit définit une limite sur le nombre total de transactions pour lesquelles le jeton d'accès peut être utilisé pendant une durée de vie du jeton d'accès.

15. Programme informatique selon la revendication 14, comprenant en outre des instructions qui, lorsqu'elles sont exécutées par l'ordinateur, amènent l'ordinateur à réaliser un procédé selon l'une des revendications 2 à 11.
